# EUROPEAN PATENT SPECIFICATION

(11) **EP 2 281 350 B1**
(45) Date of publication and mention of the grant of the patent: **15.01.2014**
(21) Application number: 09754184.1
(22) Date of filing: 21.05.2009
(51) Int. Cl.: H04B 3/36

(54) **ECHO CANCELLATION FOR DVB REPEATERS**
ECHOUNTERDRÜCKUNG FÜR DVB-RELAISSTATIONEN
ANNULATION DE L'ÉCHO POUR DES RÉPÉTEURS DVB

(30) Priority: 27.05.2008 IT MO20080161
(43) Date of publication of application: 09.02.2011
(73) Proprietor: Meta System S.p.A., 42124 Reggio Emilia (IT)
(72) Inventor: DARDARI, Davide, I-47039 Savignano sul Rubicone (FC) (IT); MAZZOTTI, Matteo, I-48010 Fusignano (RA) (IT); MALDINI, Giorgio, I-42027 Montecchio Emilia (RE) (IT); BUONOCUNTO, Nicola, I-42122 Reggio Emilia (IT)
(74) Representative: Brunacci, Marco
(86) International application number: PCT/IB2009/005664
(87) International publication number: WO 2009/144556

(56) References cited:
- EP-A- 1 545 022
- US-A1- 2007 191 071

## Description

### Technical Field

The present invention relates to an improved repeater device for cancelling and/or reducing echo signals and to the relative method.

In the field of telecommunications, with reference to the transmission of analog or digital signals, for some time now electronic devices known as repeaters have been used, which receive an input signal and re-transmit it in amplified form in order to guarantee that it will travel long distances.

### Background Art

It is also known that when designing a repeater it is of fundamental importance that correct disturbance reduction or cancellation techniques are used, in relation to known disturbances such as echo signals, in particular due to undesired coupling between the receiving antenna and the transmitting antenna of the repeater.

These echo signals are particularly critical when considering repeater devices known as isofrequential, as they lead to a positive retroaction on the repeater, with a consequent reduction in quality of the transmitted signal and possible instability of the system.

This consequently considerably limits the maximum gain of the signal amplifier internally of the repeater, drastically reducing the area covered by the repeater.

The techniques of reduction or cancellation of the echo signal used at present envisage the use, internally of the repeater, of a special filter for cancelling the echo which constitutes a negative retroaction which can completely or partially annul the effect of the above-mentioned coupling.

This cancellation filter can be a FIR (Finite Impulse Response) or an IIR (Infinite Impulse Response) and, in general, implements suitable adaptive algorithms (LMS, BLMS, VSLMS, RLS or others), which enable to converge at an estimation of the coupling channel of the initial start-up phase of the repeater and to perform the control on the coupling channel during full functioning of the repeater, such as to compensate for any variations over time.

In particular, the main cancellation techniques used at present are realised by means of echo-estimation methods and relative compensation which work completely in a closed link, and exploit precise characteristics of the signal to be retransmitted such as e.g. the presence of pilot under-carriers in a case of multi-carrier transmissions, such as the DVB-T (Digital Video Broadcasting - Terrestrial) signal.

These technical details relating to cancellation, however, exhibit various drawbacks.

Firstly, the complexity of the techniques required for extracting the data relating to the echoes from the signal received is often considerable.

Secondly, a repeater using the above-mentioned techniques is strongly constrained to the particular signal to be retransmitted.

Finally, in the presence of very strong echoes, these systems are easily subject to instability during the stage of start-up and initial functioning.

Also known are cancellation techniques which during the start-up functioning phase of the repeater perform a first estimation of the coupling channel without retro-action, i.e. in open link.

These cancellation techniques envisage the sending, on the part of the repeater, of a low-power reference signal, constituted by a sequence having good self correlation properties and suitable for enabling an estimation of the coupling channel.

During full functioning of the repeater this reference signal is transmitted superposed on the useful signal to be retransmitted, while respecting the spectral templates of the service.

This enables a cancellation of the echo signals to be performed, unconstrained by the specific signal characteristics to be retransmitted and, further, the system is less subject to instability phenomena during the start-up phase of repeater functioning.

These known cancellation techniques, however, exhibit some drawbacks.

In particular, the use of these cancellation techniques requires, in general, considerably complex methodologies which can lead to a not inconsiderable increase in the time required for estimating the coupling channel.

For optimal use of these techniques, therefore, a compromise has to be reached between operating speed and complexity of implementation.

Further, the use of sequences having a good self-correlation probability is generally not easy to set up.

For example, PN-type sequences are simple to set up but do not give excellent results, while CAZAC sequences have better properties but generating them in real-time requires special reserved archives.

Document US 2007/191071 A1 discloses a method for isofrequency retransmission of a digital signal.

Document EP 1 545 022 A discloses a loop interference canceller that carries out an adaptive operation of responding to time variations of the phase or level of loop interference or key station wave.

However, the above solutions could be improved in order to obtain a considerably less complex device easily and efficiently usable for the cancellation and/or the reduction of echo signals, independently of the type of useful signal to be transmitted.

### Object of the Invention

The main aim of the present invention is to provide an improved repeater device for cancelling and/or reducing echo signals and the relative method which enable cancellation and/or reduction of echo signals with a stable system, independently of the type of useful signal to be transmitted and with the use of considerably less complex devices with respect to solutions at present available. A further object of the present invention is to provide an improved repeater device for cancelling and/or reducing echo signals and the relative method which enable the above-mentioned drawbacks in the prior art to be obviated with a rational, simple, easily applicable and relatively inexpensive solution. The above-mentioned objects are attained with the present improved repeater device for cancelling and/or reducing echo signals, comprising at least an amplification line of an input signal received into an output signal to be transmitted and at least an echo-cancelling unit associated to said amplification line for reducing or cancelling an echo signal received, generated by said output signal and superposed on said input signal, said echo-cancelling unit having at least an echo-cancelling filter, characterised in that said echo-cancelling unit comprises impulse generating means associated to said amplification line and suitable for generating at least an impulse signal to be transmitted, estimation means for estimating said echo signal starting from said input signal and from said impulse signal transmitted, and means for updating the coefficients of the echo-cancelling filter starting from the estimated echo signal.

The above objects are also attained by the present method for cancelling and/or reducing echo signals in repeater devices, characterised in that it comprises: at least a stage of generating at least an impulse signal; at least a stage of transmitting an output signal comprising said impulse signal; at least a stage of receiving an input signal on which an echo signal is superposed, which echo signal is at least in part generated by said impulse signal transmitted; at least a stage of estimating said echo signal performed starting from said input signal and from said impulse signal transmitted; at least a stage of updating coefficients of at least a cancelling filter of said echo signal performed starting from the estimated echo signal.

### Brief Description of the Drawings

Further characteristics and advantages of the present invention will better emerge from the following description of a preferred though non exclusive embodiment of an improved repeater device for cancelling and/or reducing echo signals and the relative method, illustrated by way of non-limiting example in the accompanying figures of the drawings, in which:
figure 1 is a general structural diagram of the repeater device according to the invention;
figure 2 is a general structural diagram of the echo-cancelling unit of the repeater device according to the invention;
figure 3 is an example of an echo signal received by the repeater device according to the invention in response to an impulse signal transmitted;
figures 4, 5 and 6 illustrate an example of signals processed and transmitted by means of a first embodiment of the repeater device according to the invention; figures 7, 8, 9 and 10 illustrate an example of signals processed and transmitted by means of a second embodiment of the repeater device according to the invention.

### Preferred Embodiments of the Invention

With special reference to the figures of the drawings, RP denotes in its entirety a repeater device, of a type usable for operating with analog or digital signals, improved for cancelling or in any case reducing echo signals.

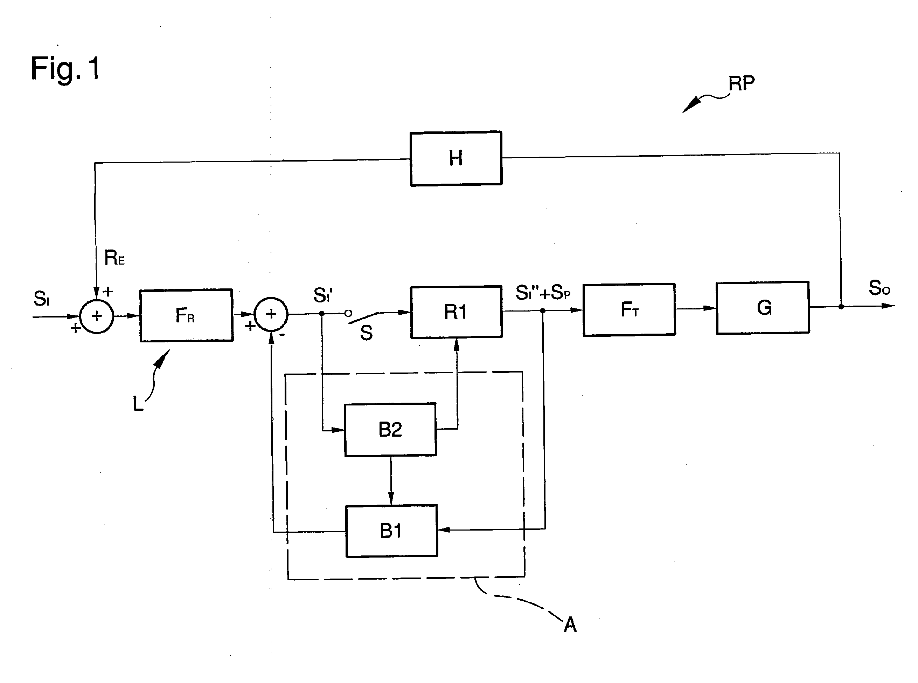

The repeater device RP comprises an amplification line, denoted in its entirety in figure 1 by reference L, which is destined to amplify an input signal S_{I} received into an output signal So to be transmitted.

In the present description reference will be made to input signals S_{I} and output signals So of a digital type, in particular digital signals of the type defined in transmission standard DVB-T (Digital Video Broadcasting - Terrestrial) or the like. It is further stressed that the repeater device RP and the relative method for diffusing can be used for different types of signals.

The repeater device RP has a receiving antenna and a transmitting antenna, which are types commonly used for diffusion of electromagnetic signals which respectively receive the input signal S_{I} and transmit the output signal S_{O},

The repeater device RP advantageously comprises a echo-cancelling unit A, associated to the amplification unit L and destined to cancel or reduce an echo signal R_{E} received by the receiving antenna and superposed on the input signal S_{I}.

In the present description, by the term echo signal R_{E} is meant a disturbance due to an undesired coupling between the receiving antenna and the transmitting antenna of the repeater device RP.

The echo signal R_{E}, then, is generated by the output signal So and is due to the coupling channel between the receiving antenna and the transmitting antenna, which leads to a positive retroaction on the amplification line L, with a consequent instability of the repeater device RP. The positive retroaction on the amplification line L has been schematically represented in figure 1, in which reference H denotes the generic transfer function of the coupling channel.

The amplification line L comprises an amplification unit G with predefined gain, arranged downstream with respect to the echo-cancelling unit A.

The amplification line L comprises a reception filter F_{R}, arranged upstream with respect to the echo-cancelling unit A and destined to filter the input signal S_{I}. In particular, the reception filter F_{R} is used for reducing the thermal noise in input and interference from adjacent channels.

The amplification line L further comprises a transmission filter F_{T}, arranged downstream with respect to the echo-cancelling unit A and destined to filter the output signal So, before transmission.

In particular, the transmission filter F_{T} is arranged along the amplification line L upstream of the amplification unit G and is used for shaping the power spectrum of the total transmitted signal, with the aim of satisfying the legally-imposed electromagnetic compatibility templates.

As is schematically illustrated in figure 1, the echo-cancelling unit A comprises a filter group B1 and an estimation group B2 destined to perform an estimation of the coupling channel H.

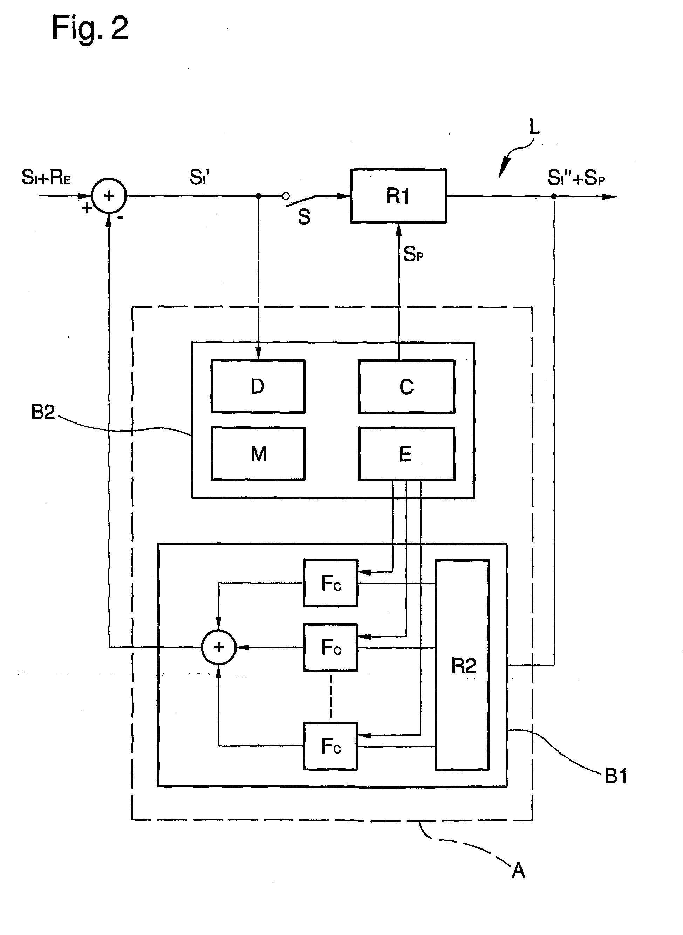

The filter group B1, in particular, introduces a negative retroaction on the amplification line L and is constituted by a plurality of echo-cancelling filters F_{C}, destined to cancel several cancellation time windows T_{C}, such as to compensate for the presence of multiple groups of echo signals R_{E}, spread out over time. The thus-filtered signal has been denoted generically in figures 1 and 2 with reference S_{I}'.

Each of the echo-cancelling filters F_{C} can be a FIR (Finite Impulse Response) or the like. Echo-cancelling filters F_{C} of a different type can however be used.

The estimation group B2 advantageously comprises impulse generating means C, associated to the amplification line L and destined to generate a sequence of impulse signals S_{P} to be transmitted via the repeater device RP.

The estimation group B2 has estimation means D of the coupling channel H between the transmitting antenna and the receiving antenna, destined to estimate, in particular, the width and the position in time of a series of echo signals R_{E} received and generated by the sequence of impulse signals S_{P} transmitted. To this end storing means are provided, generically denoted in figure 2 with the reference M, destined to store the control logic of the estimation means D.

The estimation group B2 further comprises updating means E of the coefficients of each of the echo-cancelling filters F_{C} and the position of the cancellation time windows T_{C}, in which the updating of the coefficients is done starting from the estimated coupling channel H and, then, from the corresponding estimated echo signal R_{E}. In particular, the updating means E can comprise an arithmetic and logic unit set up to dynamically modify the coefficients of the echo-cancelling filters F_{C}.

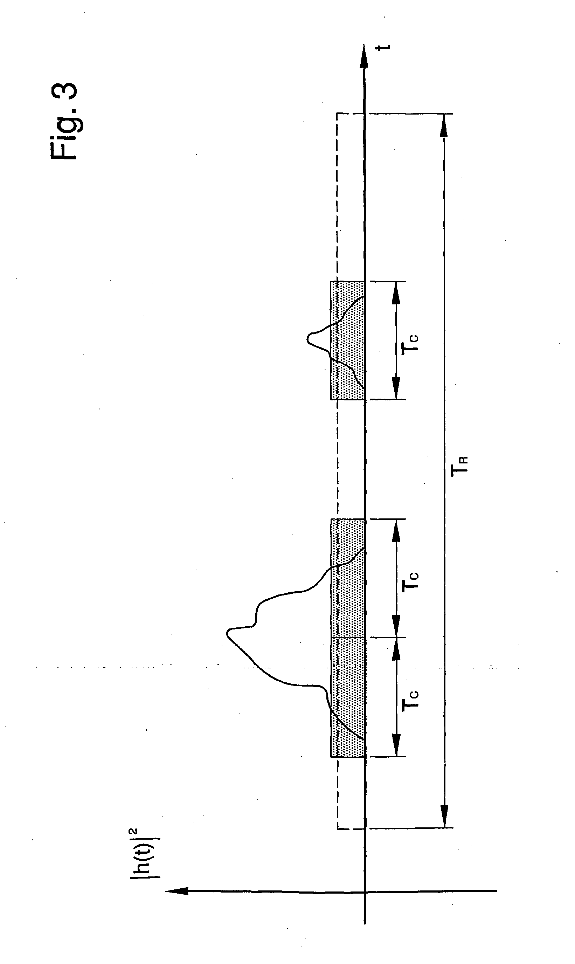

By way of example, figure 3 illustrates an example of an impulse response h(t) of the coupling channel H, which illustrates the reception of a plurality of echo signals R_{E} which are spaced over time and the arrangement of several cancellation time windows T_{C}, positioned internally of a special search time window T_{R} and at the echo signals R_{E}.

The filter group B1, in particular, has the input associated to the amplification line L, downstream with respect to the impulse generating means C, and has the output thereof associated to the amplification line L upstream with respect to the estimation means D.

The impulse generating means C can usefully comprise regulation means for regulating at least one from between the power and the frequency of the impulse signals S_{P}, such as to enable an optimal balancing between the precision in cancelling the echo signal S_{P} and the quality of the output signal So transmitted. The repeater device RP advantageously comprises an on/off switch S of the amplification line L which is arranged downstream with respect to the estimation means D and upstream with respect to the impulse generating means C.

The switch S is destined to enable selection between two operating stages of the repeater device RP.

In a first start-up stage of the repeater device RP, the switch S is open and the output signal So is constituted by the sequence of impulse signals S_{P}.

In a second full functioning stage of the repeater device RP, the switch S is closed and the output signal So comprises the series of impulse signals S_{P} superposed on a useful signal to be retransmitted, constituted by the input signal S_{I} received by the receiving antenna, subsequently filtered by the filter group B1 and amplified by the amplification unit G.

The repeater device RP usefully comprises a first delay line R1 on the amplification line L and a second delay line R2 internally of the filter group B1. In particular, the first delay line R1 can be used for de-correlating the output signal So from the input signal S_{I} and for providing an operating window for opportunely positioning the impulse signals Sp.

On the contrary, the second delay line R2 introduces the time delay necessary for positioning the first of the cancellation windows T_{C} at the first of the echo signals S_{E} detected and for positioning the following cancellation windows T_{C}. The signal thus time-delayed has been generically denoted in figures 1 and 2 with reference S_{I}".

The method for cancelling and/or reducing the echo signals, applied to the repeater device RP, includes generation, by means of the impulse generating means C, of a sequence of impulse signals S_{P} of an appropriate power and opportunely time-spaced.

The method comprises the transmission of such sequence of impulse signals S_{P}, by means of the transmitting antenna of the repeater device RP, and the reception by means of the receiving antenna of an input signal S_{I}, on which is superposed an echo signal R_{E} at least partly generated by the sequence of impulse signals S_{P} transmitted.

The method comprises a stage of estimating the coupling channel H and thus the echo signal R_{E}. This estimation is performed starting from the input signal S_{I} and the impulse signal S_{P} transmitted by the use, e.g., of statistical methods such as MLE (Maximum Likelihood Estimation) or the like.

Finally, the method comprises updating the coefficients of the echo-cancelling filters F_{C} of the filter group B1 on the basis of the estimated echo signal R_{E}.

In particular, the use of the repeater device RP firstly includes the selection of the start-up stage via the switch S.

In this start-up stage the switch S is open, the echo-cancelling unit A operates in open link and the output signal So transmitted by the repeater device RP is constituted exclusively by the sequence of impulse signals S_{P} generated by the impulse generating means C. During the start-up stage, therefore, the signal transmitted by the repeater device RP is not a useful signal for the final user, and, consequently, the power or the frequency of the sequence of impulse signals S_{O} transmitted can be high, in order to improve the rapidity and the quality of the initial estimation of the coupling channel H.

During the start-up stage of the repeater device RP, the estimation group B2 of the coupling channel H determines the number and the position of a plurality of cancellation time windows T_{C} internally of a search time window T_{R}. Each of the cancellation time windows T_{C} indicates a time interval in which the cancellation or, in any case, the reduction of the echo signal R_{E} is performed. Then the estimation of the coupling channel H is carried out and the updating of the coefficients of the echo-cancelling filters F_{C} operating internally of respective cancellation time windows T_{C}, with the aim of compensating for the presence of groups of echo signals R_{E} spaced between them over time.

The method then comprises the selection by means of the switch S of the full functioning of the repeater device RP, a stage in which the input signal S_{I} received is repeated.

During the stage of full functioning the switch S is closed, the echo-cancelling unit A operates in a closed link and the output signal So transmitted by the repeater device RP comprises the sequences of impulse signals S_{P} superposed on a useful signal to be retransmitted. In particular, the useful signal to be retransmitted, denoted in the figures with reference S_{I}", is constituted by the input signal S_{I} received from the receiving antenna of the repeater device RP, filtered by the filter group B1 and thereafter amplified by the amplification unit G.

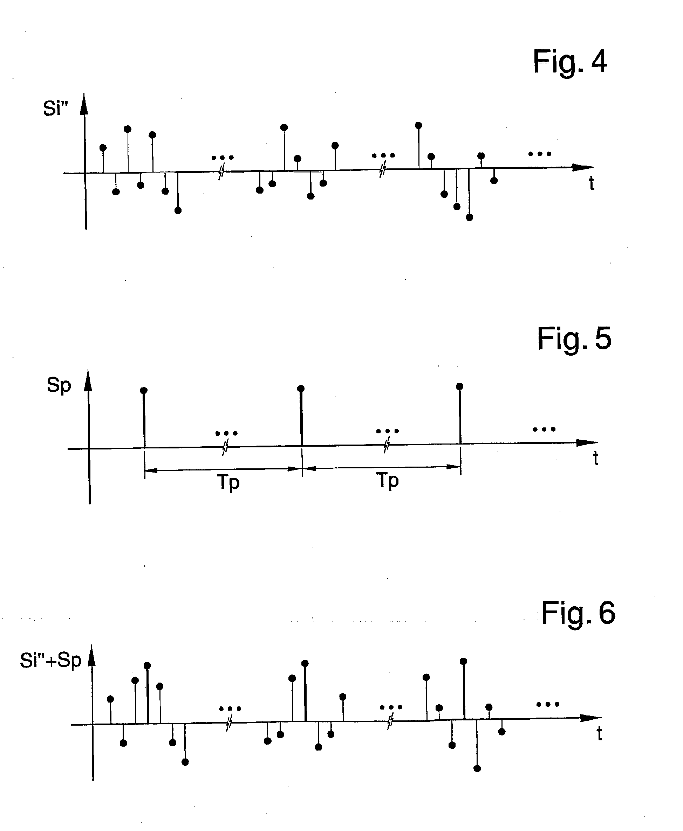

Purely by way of example, figures 4, 5 and 6 respectively illustrate a possible useful signal to be retransmitted S_{I}", a possible sequence of impulse signals S_{P}, generated at constant time intervals T_{P} and superposable on the useful signal S_{I}", and the resulting output signal, denoted by S_{I}"+S_{P}, then amplified and transmitted by means of the repeater device RP.

During full functioning, the stage of estimating the coupling channel H performed by the estimation group B2 comprises detecting variations in the estimated echo signal R_{E} during the start-up stage, performed in the cancellation time windows T_{C}, and the consequent updating of the coefficients of the echo-cancelling filters F_{C}.

The estimation during full functioning comprises, furthermore, verification and possible optimal repositioning of the cancellation time windows T_{C}, as well as the detection of any instability phenomena.

During full functioning of the repeater device RP, it is usefully possible to regulate the power and/or the frequency of the sequence of impulse signals S_{P}, with the aim of enabling an optimal balancing between the precision of the cancellation of the echo signal R_{E} and the quality of the output signal So transmitted.

The method further comprises introduction of a time delay on the input signal S_{I} by means of the delay lines R1 and R2, with the aim of positioning the cancellation windows T_{C} at the echo signals R_{E} detected.

Advantageously the embodiment of different variants of the method of the invention is not excluded.

In particular, in a first variant the method can comprise, during the stage of full functioning of the repeater device RP, opportunely superposing the impulse signal S_{P} on the filtered useful signal S_{I}". This in practice means exploiting the knowledge of the input signal S_{I} to be retransmitted, consequently selecting the position and the direction, in phase and square, of each impulse signal S_{P} according to the position of maximum width of the input signal S_{I}.

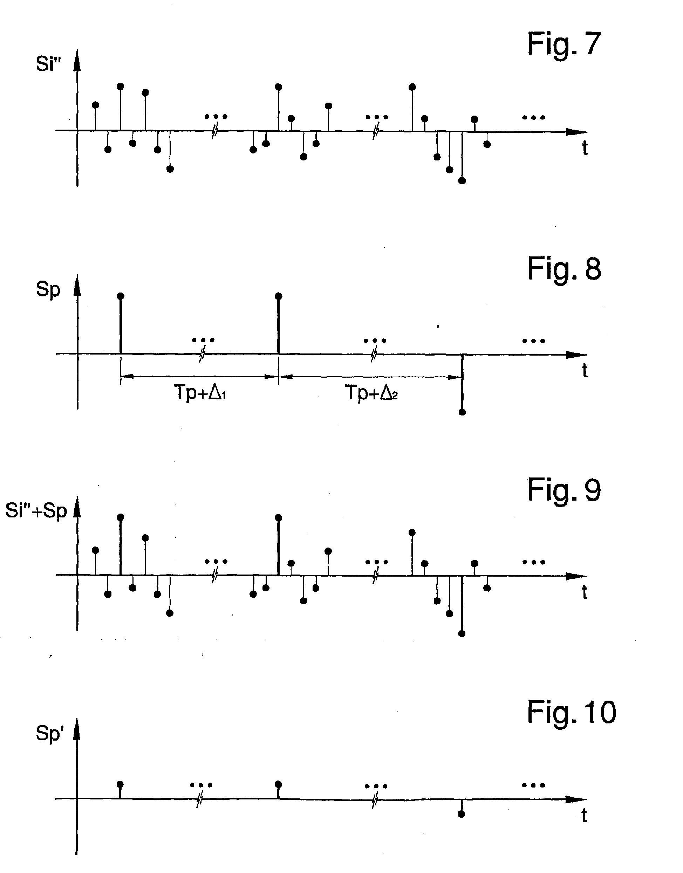

Purely by way of example, figures 7, 8 and 9 illustrate, respectively, a possible useful signal to be retransmitted S_{I}", a possible sequence of impulse signals S_{P}, the position in time and direction of which is opportunely selectable, and the resulting output signal, denoted by S_{I}"+S_{P}, then amplified and transmitted by means of the repeater device RP.

In this way the power of the impulse signal transmitted is significantly reduced, illustrated in figure 10 with reference S_{P}', in identical conditions of size of impulses transmitted overall, with a consequent reduction in the disturbances perceived by the final user and a general improvement in performance.

In a second variant of the method of the invention, the stage of estimating can comprise, during the stage of full functioning of the repeater device RP, the filtering of the input signal S_{I} by implementation of adaptive algorithms such as LMS (Least Mean Squares) or others. The adaptive filtering can be performed parallel to the transmission of the sequence of impulse signals S_{P}. In this way it is possible to use multiple channel estimation techniques together, with a consequently greater precision in the estimation of the coupling channel H.

The impulse transmission, e.g., enables constant monitoring of a wide time window, and rapid detection of the presence of echo signals, as well as quick control of the onset of any instability in the repeater device RP. At the same time, more classic adaptive filtering techniques, such as LMS or others, can be exploited for their well-known monitoring capacities of variations of the coupling channel H.

The transmission of the sequence of impulse signals S_{P} can advantageously be exploited in the start-up stage, in order to estimate the non-linear characteristics of the amplifier G and for automatically determining the pre-correction tables to be applied internally of the repeater device RP.

Similarly, during full functioning, periodic estimations can be made of the non-linear characteristics of the amplifier G in order to adapt the pre-corrector to any eventual variations.

It has in fact been ascertained how the described invention achieves the proposed objects and in particular the fact is underlined that the described repeater device and method enable cancellation and/or reduction of echo signals using a stable system independently of the type of useful signal to be transmitted and with the use of considerably less complex devices than in the prior art.

The invention thus conceived is susceptible to numerous modifications and variations, all of which falling within the scope of the inventive concept. Furthermore all the details can be replaced with others that are technically equivalent.

In practice, the materials used, as well as the contingent shapes and dimensions, may be any according to requirements without because of this moving outside the protection scope of the following claims.

## Claims

1. An improved repeater device (RP) for cancelling and/or reducing echo signals, comprising at least an amplification line (L) of an input signal (S_{I}) received by a receiving antenna into an output signal (S_{O}) to be transmitted by a transmitting antenna and at least an echo-cancelling unit (A) associated to said amplification line (L) for reducing or cancelling an echo signal (R_{E}) received by said receiving antenna, generated by said output signal (S_{O}) and superposed on said input signal (S_{I}), due to the coupling channel (H) between said receiving antenna and said transmitting antenna, said echo-cancelling unit (A) having at least an echo-cancelling filter (F_{C}), **characterised in that** said echo-cancelling unit (A) comprises impulse generating means (C) associated to said amplification line (L) and suitable for generating at least an impulse signal (S_{P}) to be transmitted by said transmitting antenna, estimation means (D) of said coupling channel (H) between the transmitting antenna and the receiving antenna for estimating from said input signal (S_{I}) and from said impulse signal (S_{P}) the width and the position in time of at least an echo signal (R_{E}) received by said receiving antenna and generated by said impulse signal (S_{P}) transmitted, and updating means (E) for updating the coefficients of the echo-cancelling filter (F_{C}) starting from the estimated echo signal (R_{E}).

2. Repeater device (RP) according to claim 1, **characterised in that** it comprises at least an on/off switch (S) of said amplification line (L) arranged downstream with respect to the estimation means (D) and upstream with respect to said impulse generating means (C) and destined to enable a selection between two operating stages of the repeater device (RP): a first start-up stage wherein the switch (S) is open and the output signal (S_{O}) is constituted by said impulse signal (S_{P}) and a second full functioning stage wherein the switch (S) is closed and the output signal (S_{O}) comprises said impulse signal (S_{P}) superposed on a useful signal (S_{I}") to be retransmitted.

3. Repeater device (RP) according to claim 1, **characterised in that** said echo-cancelling filter (F_{C}) is of the type of a negative retroaction filter.

4. Repeater device (RP) according to claim 1, **characterised in that** said echo-cancelling filter (F_{C}) has the input associated to said amplification line (L), downstream with respect to said impulse generating means (C).

5. Repeater device (RP) according to claim 1, **characterised in that** said echo-cancelling filter (F_{C}) has the output associated to said amplification line (L), upstream with respect to said estimation means (D).

6. Repeater device (RP) according to claim 1, **characterised in that** said amplification line (L) comprises at least a delay line (R1).

7. Repeater device (RP) according to claim 1, **characterised in that** said impulse generating means (C) comprise regulation means for regulating at least one from between the power and the frequency of said impulse signal (S_{P}).

8. Repeater device (RP) according to claim 1, **characterised in that** said amplification line (L) comprises at least an amplification unit (G) of said input signal (S_{I}).

9. A method for cancelling and/or reducing echo signals in a repeater device (RP), wherein said repeater device (RP) comprises at least an amplification line (L) of an input signal (S_{I}) received by a receiving antenna into an output signal (S_{O}) to be transmitted by a transmitting antenna and at least an echo-cancelling unit (A) associated to said amplification line (L) for reducing or cancelling an echo signal (R_{E}) received by said receiving antenna, generated by said output signal (S_{O}) and superposed on said input signal (S_{I}), due to the coupling channel (H) between said receiving antenna and said transmitting antenna, said echo-cancelling unit (A) having at least an echo-cancelling filter (F_{C}), **characterised in that** the method comprises:
- at least a stage of generating at least an impulse signal (S_{P}) to be transmitted by said transmitting antenna;
- at least a stage of transmitting by said transmitting antenna said output signal (S_{O}) comprising said impulse signal (S_{P});
- at least a stage of receiving by said receiving antenna an input signal (S_{I}) on which an echo signal (R_{E}) is superposed, which echo signal (R_{E}) is at least partly generated by said impulse signal (S_{P}) transmitted;
- at least a stage of estimating the width and the position in time of said echo signal (R_{E}) generated by said impulse signal (S_{P}) transmitted, performed starting from said input signal (S_{I}) and by said impulse signal (S_{P});
- at least a stage of updating the coefficients of said echo-cancelling filter (F_{C}) for cancelling said echo signal (R_{E}), performed starting from the estimated echo signal (R_{E}).

10. Method according to claim 9, **characterised in that** it comprises the selection between a start-up stage, in which said output signal (S_{O}) is constituted by said impulse signal (S_{P}), and a full functioning stage, in which said output signal (S_{O}) comprises said impulse signal (S_{P}) and at least a useful signal (S_{I}") received and to be retransmitted.

11. Method according to claim 9, **characterised in that** it comprises determining at least a cancellation time window (T_{C}) of said echo signal (R_{E}).

12. Method according to claim 11, **characterised in that** said cancellation time window (T_{C}) is determined internally of a predetermined search time window (T_{R}).

13. Method according to claim 11, **characterised in that** said stage of estimating comprises detecting variations of said echo signal (R_{E}) internally of said cancellation time window (T_{C}).

14. Method according to claim 11, **characterised in that** said stage of estimating comprises verifying and repositioning of said cancellation time window (T_{C}).

15. Method according to claim 9, **characterised in that** it comprises a stage of regulating at least one from between the power and the frequency of said impulse signal (S_{P}).

16. Method according to claim 9, **characterised in that** said stage of generating comprises periodic generation of impulse signals (S_{P}) of an appropriate power which impulse signals (S_{P}) are appropriately time-spaced from one another.

17. Method according to claim 11, **characterised in that** it comprises at least a stage of introducing a time delay of said input signal (S_{I}) destined to position said cancellation time window (T_{C}) at said echo signal (R_{E}) detected.

## Patentansprüche

1. Verbessertes Repeatergerät (RP) zum Beseitigen und/oder Reduzieren von Echosignalen, mit wenigstens einer Leitung (L) zur Verstärkung eines durch eine Empfangsantenne empfangenes Eingangssignals (S₁) in ein durch eine Sendeantenne zu übertragendes Ausgangssignal (S_{O}) und mit wenigstens einer Echo-Beseitigungseinheit (A), die mit der Verstärkungsleitung (L) zum Reduzieren oder Beseitigen eines von der Empfangsantenne empfangenen Echosignals (R_{E}) verbunden ist, das durch das Ausgangssignal (S_{O}) erzeugt und dem Eingangssignal (S₁) aufgrund des Verbindungskanals (H) zwischen der Empfangsantenne und der Sendeantenne überlagert ist, wobei die Echo-Beseitigungseinheit (A) wenigstens ein Echo-Beseitigungsfilter (F_{C}) aufweist, **dadurch gekennzeichnet, dass** die Echo-Beseitigungseinheit (A) aufweist eine Impulserzeugungseinrichtung (C), die mit der Verstärkungsleitung (L) verbunden ist und zum Erzeugen wenigstens eines von der Sendeantenne zu übertragenden Impulssignals (S_{P}) geeignet ist, einer Beurteilungseinrichtung (D) für den Verbindungskanal (H) zwischen der Sendeantenne und der Empfangsantenne, um aus dem Eingangssignal (S₁) und aus dem Impulssignal (S_{P}) die zeitabhängige Breite und Position wenigstens eines durch die Empfangsantenne empfangenen und durch das gesendete Impulssignal (S_{P}) erzeugten Echosignals (R_{E}) zu beurteilen, und einer Aktualisierungseinrichtung (E) zum Aktualisieren der Koeffizienten des Echo-Beseitigungsfilters (F_{C}) ausgehend von dem beurteilten Echosignal (R_{E}).

2. Repeatergerät (RP) nach Anspruch 1, **dadurch gekennzeichnet, dass** dieses wenigstens einen Ein/Aus-Schalter (S) für die Verstärkungsleitung (L) umfasst, der stromabwärts in Bezug auf die Beurteilungseinrichtung (D) und stromaufwärts in Bezug auf die Impulserzeugungseinrichtung (C) angeordnet ist und dazu bestimmt ist, eine Auswahl zwischen zwei Betriebsstufen des Repeatergerätes (R_{P}) zu ermöglichen: eine erste Start-up Stufe, in welcher der Schalter (S) geöffnet ist und das Ausgangssignal (S_{O}) durch das Impulssignal (S_{P}) gebildet wird, und eine zweite Vollfunktionsstufe, in welcher der Schalter (S) geschlossen ist und das Ausgangssignal (S_{O}) das zurückzusendende, auf einem nutzbaren Signal (S_{I}") überlagerte Impulssignal (S_{P}) umfasst.

3. Repeatergerät (RP) nach Anspruch 1, **dadurch gekennzeichnet, dass** das Echo-Beseitigungsfilter (F_{C}) in der Art eines negativen Retroaktionsfilters vorliegt.

4. Repeatergerät (RP) nach Anspruch 1, **dadurch gekennzeichnet, dass** das Echo-Beseitigungsfilter (F_{C}) mit dem Eingang mit der Verstärkungsleitung (L) verbunden ist, stromabwärts in Bezug auf die Impulserzeugungseinrichtung (C).

5. Repeatergerät (RP) nach Anspruch 1, **dadurch gekennzeichnet, dass** das Echo-Beseitigungsfilter (F_{C}) mit dem Ausgang mit der Verstärkungsleitung (L) verbunden ist, stromaufwärts in Bezug auf die Beurteilungseinrichtung (W).

6. Repeatergerät (RP) nach Anspruch 1, **dadurch gekennzeichnet, dass** die Verstärkungsleitung (L) wenigstens eine Verzögerungsleitung (R1) umfasst.

7. Repeatergerät (RP) nach Anspruch 1, **dadurch gekennzeichnet, dass** die Impulserzeugungseinrichtung (C) eine Regulierungseinrichtung zum Regulieren der Stärke und/oder der Frequenz des Impulssignals (S_{P}) umfasst.

8. Repeatergerät (RP) nach Anspruch 1, **dadurch gekennzeichnet, dass** die Verstärkungsleitung (L) wenigstens eine Verstärkungseinheit (G) für das Eingangssignal (S_{I}) umfasst.

9. Verfahren zum Beseitigen und/oder Reduzieren von Echosignalen in einem Repeatergerät (RP), wobei das Repeatergerät (RP) aufweist wenigstens eine Leitung (L) zum Verstärken eines durch eine Empfangsantenne empfangenen Eingangssignals (S₁) in ein durch eine Sendeantenne zu übertragendes Ausgangssignal (S_{O}) und wenigstens eine Echo-Beseitigungseinheit (A), die mit der Verstärkungsleitung (L) zum Reduzieren oder Beseitigen eines Echosignals (R_{E}) verbunden ist, das aufgrund des Verbindungskanals (H) zwischen der Empfangsantenne und der Sendeantenne durch die Empfangsantenne empfangen, durch das Ausgangssignal (S_{O}) erzeugt und auf dem Eingangssignal (S₁) überlagert wird, wobei die Echo-Beseitigungseinheit (A) wenigstens ein Echo-Beseitigungsfilter (F_{C}) aufweist, **dadurch gekennzeichnet, dass** das Verfahren umfasst:
- wenigstens eine Stufe des Erzeugens wenigstens eines Impulssignals (S_{P}), das durch die Sendeantenne übertragen werden soll;
- wenigstens eine Stufe des Sendens des Ausgangssignals (S_{O}) mit dem Impulssignal (S_{P}) durch die Sendeantenne;
- wenigstens eine Stufe des Empfangens eines Eingangssignals (S_{I}) durch die Empfangsantenne, welchem ein Echosignal (R_{E}) überlagert ist, wobei das Echosignal (R_{E}) wenigstens teilweise durch das gesendete Impulssignal (S_{P}) erzeugt wird;
- wenigstens eine Stufe des Beurteilens der zeitabhängigen Breite und Position des durch das gesendete Impulssignal (S_{P}) erzeugten Echosignals (R_{E}), die ausgehend von dem Eingangssignal (S₁) und durch das Impulssignal (S_{P}) durchgeführt wird;
- wenigstens eine Stufe des Aktualisierens der Koeffizienten des Echo-Beseitigungsfilters (F_{C}) zum Beseitigen des Echosignals (R_{E}), durchgeführt ausgehend von dem beurteilten Echosignal (R_{E}).

10. Verfahren nach Anspruch 9, **dadurch gekennzeichnet, dass** dieses die Auswahl zwischen einer Start-up Stufe, in welcher das Ausgangssignal (S_{O}) durch das Impulssignal (S_{P}) gebildet wird, und einer Vollfunktionsstufe umfasst, in welcher das Ausgangssignal (SO) das Impulssignal (S_{P}) und wenigstens ein empfangenes und zurückzusendendes nützliches Signal (S_{I}") umfasst.

11. Verfahren nach Anspruch 9, **dadurch gekennzeichnet, dass** dieses ein Bestimmen wenigstens eines Beseitigungs-Zeitfensters (T_{C}) des Echosignals (R_{E}) umfasst.

12. Verfahren nach Anspruch 11, **dadurch gekennzeichnet, dass** das Beseitigungs-Zeitfenster (T_{C}) intern aus einem vorbestimmten Suchzeitfenster (T_{R}) bestimmt wird.

13. Verfahren nach Anspruch 11, **dadurch gekennzeichnet, dass** die Beurteilungsstufe Detektiervariationen innerhalb des Beseitigungs-Zeitfensters (T_{C}) für das Echosignal (R_{E}) umfasst.

14. Verfahren nach Anspruch 11, **dadurch gekennzeichnet, dass** die Beurteilungsstufe ein Verifizieren und Repositionieren des Beseitigungs-Zeitfensters (T_{C}) umfasst.

15. Verfahren nach Anspruch 9, **dadurch gekennzeichnet, dass** dieses eine Stufe zum Regulieren Stärke und/oder der Frequenz des Impulssignals (S_{P}) umfasst.

16. Verfahren nach Anspruch 9, **dadurch gekennzeichnet, dass** die Erzeugungsstufe eine periodische Erzeugung von Impulssignalen (S_{P}) von geeigneter Stärke umfasst, wobei die Impulssignale (S_{P}) geeignete Zeitabstände zueinander aufweisen.

17. Verfahren nach Anspruch 11, **dadurch gekennzeichnet, dass** dieses wenigstens eine Stufe zum Einführen einer Zeitverzögerung für das Eingangssignal (S₁) umfasst, die dazu bestimmt ist, das Beseitigungs-Zeitfenster (T_{C}) an das detektierte Echosignal (R_{E}) zu positionieren.

## Revendications

1. Dispositif répéteur amélioré (RP) pour annuler et/ou réduire des signaux d'écho, comprenant au moins une ligne d'amplification (L) d'un signal d'entrée (S_{I}) reçu par une antenne de réception en un signal de sortie (S_{O}) devant être transmis par une antenne d'émission et au moins une unité d'annulation d'écho (A) associée à ladite ligne d'amplification (L) pour réduire ou annuler un signal d'écho (R_{E}) reçu par ladite antenne de réception, généré par ledit signal de sortie (S_{O}) et superposé audit signal d'entrée (S_{I}), et dû au canal de couplage (H) entre ladite antenne de réception et ladite antenne d'émission, ladite unité d'annulation d'écho (A) comprenant au moins un filtre d'annulation d'écho (F_{C}), **caractérisé en ce que** ladite unité d'annulation d'écho (A) comprend des moyens de génération d'impulsions (C) associés à ladite ligne d'amplification (L) et appropriés pour générer au moins un signal d'impulsion (S_{P}) devant être transmis par ladite antenne d'émission, des moyens d'estimation (D) dudit canal de couplage (H) entre ladite antenne de réception et ladite antenne d'émission, pour l'estimation, à partir dudit signal d'entrée (S_{I}) et dudit signal d'impulsion (S_{P}), de la largeur et de la position temporelle d'au moins un signal d'écho (R_{E}) reçu par ladite antenne de réception et généré par ledit signal d'impulsion (S_{P}) transmis, et des moyens de mise à jour (E) pour mettre à jour les coefficients du filtre d'annulation d'écho (F_{C}) à partir du signal d'écho (R_{E}) estimé.

2. Dispositif répéteur (RP) selon la revendication 1, **caractérisé en ce qu'**il comprend au moins un commutateur marche/arrêt (S) de ladite ligne d'amplification (L), disposé en aval par rapport aux moyens d'estimation (D) et en amont par rapport auxdits moyens de génération d'impulsions (C) et destiné à permettre une sélection entre deux étapes de fonctionnement du dispositif répéteur (RP) : une première étape de démarrage dans laquelle le commutateur (S) est ouvert et le signal de sortie (S_{O)} est constitué dudit signal d'impulsion (S_{P}) et une deuxième étape de plein fonctionnement dans laquelle le commutateur (S) est fermé et le signal de sortie (S_{O}) comprend ledit signal d'impulsion (S_{P}) superposé à un signal utile (S_{I}") devant être transmis.

3. Dispositif répéteur (RP) selon la revendication 1, **caractérisé en ce que** ledit filtre d'annulation d'écho (F_{C}) est du type « filtre à rétroaction négative ».

4. Dispositif répéteur (RP) selon la revendication 1, **caractérisé en ce que**, pour ledit filtre d'annulation d'écho (F_{C}), l'entrée associée à ladite ligne d'amplification (L) est située en aval par rapport auxdits moyens de génération d'impulsions (C).

5. Dispositif répéteur (RP) selon la revendication 1, **caractérisé en ce que**, pour ledit filtre d'annulation d'écho (F_{C}), la sortie associée à ladite ligne d'amplification (L) est située en amont par rapport auxdits moyens d'estimation (D).

6. Dispositif répéteur (RP) selon la revendication 1, **caractérisé en ce que** ladite ligne d'amplification (L) comprend au moins une ligne à retard (R1).

7. Dispositif répéteur (RP) selon la revendication 1, **caractérisé en ce que** lesdits moyens de génération d'impulsions (C) comprennent des moyens de régulation pour réguler au moins l'une d'entre la puissance et la fréquence dudit signal d'impulsion (S_{P}).

8. Dispositif répéteur (RP) selon la revendication 1, **caractérisé en ce que** ladite ligne d'amplification (L) comprend au moins une unité d'amplification (G) dudit signal d'entrée (S_{I}).

9. Procédé pour annuler et/ou réduire des signaux d'écho dans un dispositif répéteur (RP), dans lequel ledit dispositif répéteur (RP) comprend au moins une ligne d'amplification (L) d'un signal d'entrée (S_{I}) reçu par une antenne de réception en un signal de sortie (S_{O}) devant être transmis par une antenne d'émission et au moins une unité d'annulation d'écho (A) associée à ladite ligne d'amplification (L) pour réduire ou annuler un signal d'écho (R_{E}) reçu par ladite antenne de réception, généré par ledit signal de sortie (S_{O}) et superposé audit signal d'entrée (S_{I}), et dû au canal de couplage (H) entre ladite antenne de réception et ladite antenne d'émission, ladite unité d'annulation d'écho (A) comprenant au moins un filtre d'annulation d'écho (F_{C}), **caractérisé en ce que** le procédé comprend :
- au moins une étape de génération d'au moins un signal d'impulsion (S_{P}) devant être transmis par ladite antenne d'émission ;
- au moins une étape de transmission, par ladite antenne d'émission, dudit signal de sortie (S_{O}) comprenant ledit signal d'impulsion (S_{P}) ;
- au moins une étape de réception, par ladite antenne de réception, d'un signal d'entrée (S_{I}) auquel un signal d'écho (R_{E}) est superposé, ledit signal d'écho (R_{E}) étant au moins en partie généré par ledit signal d'impulsion (S_{P}) transmis ;
- au moins une étape d'estimation de la largeur et de la position temporelle dudit signal d'écho (R_{E}) généré par ledit signal d'impulsion (S_{P}) transmis, mise en oeuvre en partant dudit signal d'entrée (S_{I}) et au moyen dudit signal d'impulsion (S_{P}) ;
- au moins une étape de mise à jour des coefficients dudit filtre d'annulation d'écho (F_{C}) pour annuler ledit signal d'écho (R_{E}), mise en oeuvre en partant du signal d'écho (R_{E}) estimé.

10. Procédé selon la revendication 9, **caractérisé en ce qu'**il comprend la sélection entre une étape de démarrage, dans laquelle ledit signal de sortie (S_{O}) est constitué dudit signal d'impulsion (S_{P}), et une étape de plein fonctionnement, dans laquelle ledit signal de sortie (S_{O}) comprend ledit signal d'impulsion (S_{P}) et au moins un signal utile (S_{I}") reçu et devant être transmis.

11. Procédé selon la revendication 9, **caractérisé en ce qu'**il comprend la détermination d'au moins une fenêtre temporelle d'annulation (TC) dudit signal d'écho (R_{E}).

12. Procédé selon la revendication 11, **caractérisé en ce que** ladite fenêtre temporelle d'annulation (TC) est déterminée à l'intérieur d'une fenêtre temporelle de recherche (TR) prédéterminée.

13. Procédé selon la revendication 11, **caractérisé en ce que** ladite étape d'estimation comprend la détection de variations dudit signal d'écho (R_{E}) à l'intérieur de ladite fenêtre temporelle d' annulation (T_{C}).

14. Procédé selon la revendication 11, **caractérisé en ce que** ladite étape d'estimation comprend la vérification et le repositionnement de ladite fenêtre temporelle d'annulation (T_{C}).

15. Procédé selon la revendication 9, **caractérisé en ce qu'**il comprend une étape de régulation d'au moins l'une d'entre la puissance et la fréquence dudit signal d'impulsion (S_{P}).

16. Procédé selon la revendication 9, **caractérisé en ce que** ladite étape de génération comprend la génération périodique de signaux d'impulsion (S_{P}) d'une puissance appropriée, lesdits signaux d'impulsion (S_{P}) étant espacés temporellement les uns des autres de manière appropriée.

17. Procédé selon la revendication 11, **caractérisé en ce qu'**il comprend au moins une étape d'introduction d'un retard temporel dudit signal d'entrée (S_{I}), destinée à positionner ladite fenêtre temporelle d'annulation (T_{C}) au niveau dudit signal d'écho (R_{E}) détecté.
